# EUROPÄISCHE PATENTSCHRIFT

(11) **EP 1 673 956 B1**
(45) Veröffentlichungstag und Bekanntmachung des Hinweises auf die Patenterteilung: **07.04.2010**
(21) Anmeldenummer: 04790190.5
(22) Anmeldetag: 08.10.2004
(51) Int. Cl.: H04W 8/18

(54) **Optimierung des Einsatzes von Netzressourcen eines öffentlichen Telekommunikationsnetzes**
Optimisation of use of network resources of a public telecommunication network
Optimisation de l'utilisation de resources d'un reseau publique de telecommunications

(30) Priorität: 09.10.2003 DE 10347617
(43) Veröffentlichungstag der Anmeldung: 28.06.2006
(60) Teilanmeldung: 10000377.1
(73) Patentinhaber: T-Mobile Deutschland GmbH, 53227 Bonn (DE)
(72) Erfinder: DENNERT, Thomas, 53844 Troisdorf (DE); QUAST, Joachim, 53604 Bad Honnef (DE); SPÖRL, Michael, 53225 Bonn (DE); VÖHRINGER, Gerrit, 53111 Bonn (DE); WEGMANN, Georg, 53111 Bonn (DE)
(74) Vertreter: Riebling, Peter
(86) Internationale Anmeldenummer: PCT/EP2004/011238
(87) Internationale Veröffentlichungsnummer: WO 2005/036905

(56) Entgegenhaltungen:
- EP-A- 0 711 090
- EP-A- 0 740 482
- WO-A-01/01708
- US-A- 5 708 809
- US-A1- 2002 028 678
- US-B1- 6 219 551
- US-B1- 6 366 777

## Beschreibung

Die Erfindung bezieht sich auf die Optimierung des Einsatzes von Netzressourcen eines öffentlichen Telekommunikationsnetzes bei der Vermittlung eines oder mehrerer paralleler Rufe auf eines oder mehrere Endgeräte, insbesondere im Mobilfunk.

### Hintergrund und Problemstellung

In Mobilfunknetzen werden heute verschiedene Verfahren bereitgestellt, um einem Teilnehmer die Nutzung mehrerer Endgeräte zu erlauben (so genannte Twin-Card, Multi-Card Produkte). Dieses Produktszenario ergibt sich z.B. aus der parallelen Nutzung von z.B. mobilem Endgerät, Autotelefon und Organiser. Hierbei sind jeweils ein oder sogar gleichzeitig mehrere Endgeräte für gehende oder kommende Verbindungen unter einer einheitlichen Nummer aktiviert. Bei Ansätzen mit mehreren gleichzeitig aktiven Endgeräten werden die unter einer einheitlichen Nummer erfolgenden ankommende Verbindungswünsche parallel zu mehreren Endgeräten des Teilnehmers signalisiert.

Nachteile existierender Verfahren für eine solche parallele Rufübermittlung resultieren aus der Unsicherheit über den Zustand der Endgeräte (ausgeschaltet, funktechnisch nicht erreichbar, besetzt). Hieraus ergibt sich:
- unnötige Belegung von Funk- und Festnetzressourcen für eigentlich unnötige Verbindungsversuche
- Netzdienste wie Rufumleitung werden im Netzbereich der jeweiligen gerufenen Endgeräte ausgeführt, dies führt zu teilweise unerwünschten Produktszenarien, sowie vor allem zu unnötigen Belegungen von Netzressourcen als auch zu erheblichen Zusatzkosten für Netzbetreiber und Endkunden.
- Netzdienste, wie Rufumleitung, hängen von den für die verschiedenen Endgeräte im Netz jeweils separat zugeordneten Datensätzen ab. Da diese nicht automatisch synchronisiert werden, ergibt sich ein unterschiedliches Anrufverhalten je nach aktuell genutzten Endgeräten und/oder ein erheblicher Aufwand des Nutzers, um die Endgerätedaten manuell zu synchronisieren. Weiterhin müssen die Wahlmöglichkeiten des Nutzers für die Einstellungen von Netzdiensten eingeschränkt werden, um ein korrektes Netzverhalten bei der Zustellung paralleler Anrufe zu gewährleisten.

Die EP 0 711 090 A2 offenbart ein Verfahren zur Ansteuerung einer Anordnung von zwei oder mehrere Endgeräte umfassenden Konfiguration (Mehrgerätekonfiguration) von Telekommunikationsendgeräten in einem öffentlichen Telekommunikationsnetz. Eine Vielzahl von Teilnehmeridentifikationschips teilen sich eine einzige Teilnehmeridentifikation.

US 5 708 809 A beschreibt ein Verfahren zur Aktualisierung der Programmstruktur einer modularen Kommunikationsanlage, die aus mehreren über einen Bus miteinander verbundenen Baugruppen besteht. Bei einer Inbetriebnahme oder beim Ändern der Konfiguration wird eine Aktualisierung der Programmstruktur in jeder Baugruppe selbsttätig durchgeführt.

Die EP 0 740 482 A1 betrifft ein Telefonmanagementsystem in Form eines beim Teilnehmer eingerichteten eigenständigen Prozessors, der den Anschluss einer Vielzahl von Teilnehmerendgeräten, wie Mobiltelefon, Schnurlostelefon, Anrufbeantworter, etc., ermöglicht. Bei einem eingehenden Anruf leitet der Prozessor diesen an das jeweils "aktive" Endgerät weiter.

WO 01 01708 A1 offenbart ein automatisches Anrufverteilersystem ähnlich wie EP 0 740 482 A1 mit dem Unterschied, dass hier die Verteilung von Anrufen auf die angeschlossenen Endgeräte von einem Netzelement des Kommunikationsnetzes durchgeführt wird.

Aufgabe der vorliegenden Erfindung ist es, ein Verfahren und eine Konstellation des Systems vorzuschlagen, welches eine Netzressourcen einsparende Ansteuerung von Endgeräten in einer Mehrgerätekonfiguration gewährleistet und hierbei eine zentrale Steuerung des Systemverhaltens durch den Nutzer erlaubt.

Gelöst wird diese Aufgabe durch ein Verfahren zur Optimierung des Einsatzes von Netzressourcen sowie durch ein entsprechendes System gemäß dem unabhängigen Anspruch 1 bzw. 15.

### Vorteile des Verfahrens

- Optimierte Nutzung von Netzressourcen für den Aufbau von Telekommunikationsverbindungen insbesondere im Fall von Rufumleitungen und parallelen Anrufversuchen auf mehrere einer Rufnummer zugeordnete Endgeräte.
- einfache Synchronisation von Leistungsmerkmalen eines Teilnehmers eines öffentlichen Mobilfunknetzes, die er für mehrere ihm zugeordnete Endgeräte einmalig einstellen bzw. abfragen möchte.

### Geltungsbereich

Der Grundgedanke der Erfindung bezieht sich auf Telekommunikationsnetze allgemein. Aus derzeitiger Sicht ist eine mögliche Anwendung für öffentliche Mobilkommunikationsnetze (z. B. nach dem GSM Standard) interessant, jedoch nicht darauf beschränkt.

Soweit in diesem Dokument von Endgeräten in Zusammenhang mit Mobiltelekommunikation die Rede ist, ist unter dem Begriff Endgerät neben dem Gerät selbst auch die Kombination von Endgerät und angeschlossenem Identifikations-Chip (z.B. GSM SIM , UMTS USIM etc.) in allen Abwandlungen, wie sie jetzigen und zukünftigen Mobilfunknetzen vorkommen können, zu verstehen.

### Technische Basis des Verfahrens

Das Verfahren nutzt Technologie und Vermittlungsprotokolle gemäß internationaler Telekommunikationsstandards, insbesondere wie z.B. GSM/UMTS, hierbei insbesondere gemäß der GSM CAMEL und MAP Standards. Die Dienstlogik des Verfahrens basiert auf einem zentralen Dienstknoten und einer Dienstdatenbank die mit den Vermittlungen und Mobilitäts-/Profil-Datenbanken der Teilnehmer des mobilen Telekommunikationsnetzes kommuniziert und diese steuert.

Eine typische Umsetzung einer solchen Basis bildet die IN (Intelligent Network) Technologie gemäß CCITT Ql2XX Serie (siehe auch ETSI CORE INAP Protokoll gemäß ETS 300 374, ETSI GSM CAMEL Protokoll 03.78) im Zusammenspiel mit GSM MSC und GSM HLR.

### Beschreibung des Verfahrens

Die Erfindungsidee wird im Folgenden anhand eines Beispiels näher erläutert ohne Einschränkung der universellen Anwendbarkeit. Hierbei zeigen:
- Figur 1:: eine schematische Darstellung der am erfindungsgemäßen Verfahren beteiligten Netzelemente und Einrichtungen;
- Figur 2:: Schematischer Ablauf einer Synchronisation der Teilnehmer-Mobilitäts-/Profildatenbanken.

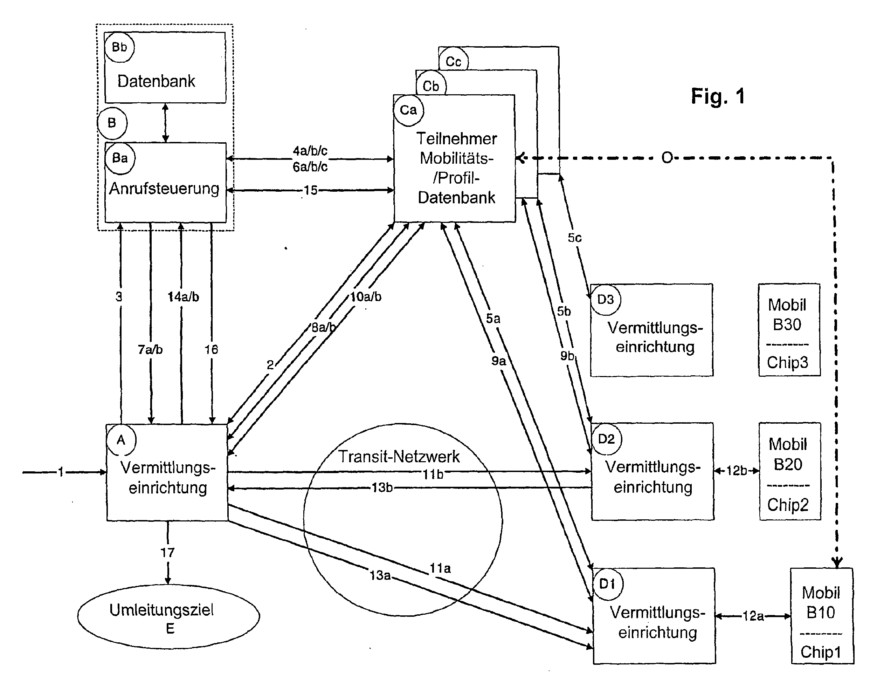

Beschreibung der in Fig. 1 genutzten Netzelemente: Die einzelnen Blöcke repräsentieren die folgenden Einrichtungen:
A) : Vermittlungseinrichtung des öffentlichen Netzes (z.B. GSM MSC: Mobile Switching Center)
Ba/b) : intelligente Anrufsteuerung des öffentlichen Netzes mit integrierter oder abgesetzter Datenbank zur Steuerung der Logik und Teilnehmerdaten (z.B. IN SCP/SMP, Service Control Point/Service Management Point)
Ca/b/c): Mobilitäts-/Profil-Datenbanken des öffentlichen Netzes mit Aufenthaltsinformationen und Leistungsmerkmalprofilen der Mobilfunkteilnehmer B10/B20/B30 (z.B. GSM HLR, Home Location Register, Heimatregister)
D1/D2/D3): Vermittlungseinrichtung des öffentlichen Netzes (z.B. GSM MSC)
B10/B20/B30) : mobile Endgeräte
E : Umleitungsziel

Mehreren mobilen Endgeräten B10, B20, B30 (Haupt- und Nebengeräte) eines Teilnehmers sei in der Datenbank Bb eines zentralen Ruf-Steuerungssystems B eine gemeinsame Rufnummer zugewiesen. Jedes Endgerät wird in bekannter Weise mit einem Identifikations-Chip, auch bezeichnet als Teilnehmeridentifikationsmodul, SIM-Karte, GSM SIM, UMTS USIM, betrieben. Auf dem Identifikations-Chip sind unter anderem Teilnehmerdaten gespeichert, die für den Zugang und die Nutzung von Diensten des Mobilfunknetzes notwendig sind.

Der Teilnehmer administriert zunächst für ein Hauptgerät B10 die Leistungsmerkmale wie z.B. Rufumleitung. Die entsprechenden Einstellungen für die Nebengeräte B20, B30 sind nicht gesetzt und können vom Teilnehmer nicht verändert werden. Eine entsprechende Einstellung für die Nebengeräte ist auch, wie im Folgenden aufgezeigt wird, nicht notwendig.

Erhält die Netzvermittlung A einen Anruf für den Teilnehmer unter der für alle seine Endgeräte einheitlichen Rufnummer, so initiiert diese eine Abfrage der Teilnehmerdatenbank Ca, welche wiederum aufgrund der entsprechend eingestellten Teilnehmerdaten eine Abfrage des zentralen Ruf-Steuerungssystems B initiiert. Dieses enthält in einer zugeordneten Datenbank die Information über die der Rufnummer zugeordneten Geräte B10, B20, B30. Für diese Geräte ermittelt das Ruf-Steuerungssystem B nun in den Mobilitäts-/Profil-Datenbanken Ca, Cb, Cc der zu rufenden Teilnehmer den Status der zugeordneten Endgeräte. Weiterhin wird hierbei auch der Status der zu rufenden Teilnehmer in den aktuellen Aufenthaltsvermittlungen D1, D2, D3 abgefragt. Basierend auf diesen Informationen wird anhand eines entsprechenden Regelwerkes im Ruf-Steuerungssystem B nun ermittelt, ob es sinnvoll ist, die Endgeräte im Netz anzurufen, oder der ankommende Anruf unmittelbar umgeleitet bzw. ausgelöst werden soll. Falls entsprechend den im Ruf-Steuerungssystem hinterlegten Regeln die Endgeräte gerufen werden sollen, so fordert das Ruf-Steuerungssystem B die Netzvermittlung A zum Fortsetzen des Rufaufbau auf, wobei hierbei parallele Anrufversuche zu mehreren der Endgeräte B10, B20, B30 erfolgen können. Gleichzeitig wird hierbei die Netzvermittlung A vom Ruf-Steuerungssystem angewiesen, das erfolglose Ende dieser Rufaufbauversuche wieder an das Ruf-Steuerungssystem Ba zurück zu melden. Üblicherweise werden eingehende Rufe in der Aufenthaltsvermittlung D1, D2, D3 des Teilnehmers bei Erreichen bestimmter Bedingungen (nicht erreichbar, keine Rufannahme innerhalb Rufintervall), aufgrund des Teilnehmerprofils in der Mobilitäts-/Profil-Datenbank Ca, Cb, Cc des gerufenen Teilnehmers, umgeleitet. Zur Vermeidung dieses unerwünschten Effektes wird die Aufenthaltsvermittlung D1, D2, D3 des Teilnehmers vom Ruf-Steuerungssystem über eine geeignete Signalisierung aufgefordert, Rufumleitungen zu unterdrücken. Falls im weiteren Verlauf tatsächlich keine Verbindung zustande kommt, da die gerufenen Endgeräte nicht erreichbar sind bzw. der Teilnehmer den Ruf nicht annimmt, so erfolgt eine Rückmeldung an das Rufsteuerungssystem B. Anhand dieser Information und einer Abfrage des Teilnehmerprofils des Haupt-Endgerätes B10, welches für alle Endgeräte genutzt wird, ermittelt die Rufsteuerung Ba die für den weiteren Ablauf gewünschte Reaktion. Dies kann das Auslösen der Verbindung oder aber eine Umleitung zu einem neuen Ziel E sein. Die Ruf-Steuerung veranlasst die Vermittlung nun zu den entsprechenden Funktionen und beendet die Steuerung.

Das nachfolgende Beispiel verdeutlicht diesen Ablauf anhand einer Beschreibung des in Fig. 1 dargestellten Ablaufes der einzelnen Ablaufschritte 0 bis 17:
0) Einstellung des Teilnehmerprofils (insbesondere gewünschtes Rufumleitungsverhalten) durch den Teilnehmer am Endgerät B10 in der zugeordneten Profil-Datenbank Ca zu einem beliebigen Zeitpunkt vor dem nachfolgend beschriebenen Ablauf.
1) ein ankommender Anruf auf die einheitliche Nummer des Teilnehmers geht bei einer Vermittlung A ein
2) Ermittlung des Teilnehmeraufenthalts, z.B. im Bereich der Vermittlung D1, und Teilnehmerprofils in der Mobilitäts-/Profil-Datenbank Ca durch die Vermittlung A
3) Abfrage der Anrufsteuerung Ba durch die Vermittlung A, ausgelöst durch das abgefragte Teilnehmerprofil
4a/b/c) Anfrage des Zustands der gerufenen Endgeräte in den Mobilitäts-/Profil-Datenbanken Ca, Cb, Cc durch die Anrufsteuerung B
5a/b/c) Anfrage/Übermittlung des Zustands der gerufenen Endgeräte B10,B20,B30 in den Vermittlungen D1, D2, D3 in deren Bereich sich die Endgeräte aufhalten
6a/b/c) Übermittlung des Zustands der gerufenen Endgeräte B10 B20, B30 an die Anrufsteuerung Ba.
   Danach erfolgt gemäß des Rufsteuerungsalgorithmus im Rufsteuerungssystem B die Ermittlung der weiteren Schritte (s. Tabelle 1). Im vorliegenden Beispiel wurde das Endgerät B30 von der Aufenthaltsvermittlung D3 als nicht erreichbar gemeldet. Ein Anrufversuch mit entsprechender Nutzung von Leitungsressourcen kann somit entfallen. Die Endgeräte B10, B20 wurden als frei gemeldet.
7a/b) Initiierung der Anrufversuche zu den "freien" Endgeräten B10/B20 des Teilnehmers
8a/b) Abfrage benötigter Informationen zum Rufaufbau von den Teilnehmer-Mobilitäts-/Profildatenbanken Ca, Cb
9a/b) Abfrage/Übermittlung benötigter Informationen zum Rufaufbau in den für die Endgeräte B10, B20 zuständigen Teilnehmervermittlungen D1,D2
10a/b) Übermittlung benötigter Informationen zum Rufaufbau zwischen Vermittlungseinrichtung A und Mobilitäts-/Profildatenbanken Ca, Cb
11a/b) Rufzustellung mit Belegung Festnetz-/Funknetz-Ressourcen, z.B. über ein Transit-Netzwerk und das Funknetz 12a/b) nicht erfolgreicher Rufaufbau zu den Endgeräten B10/B20 (z.B. wegen funktechnisch nicht erreichbar, Teilnehmer nimmt nicht an, Teilnehmer lehnt Ruf ab)
13a/b) Übermittlung einer Nachricht über nicht erfolgreichen Rufaufbau an die Vermittlung A, Freigabe der Netzressourcen
14a/b) Übermittlung nicht erfolgreicher Rufaufbau von der Vermittlung A an die intelligente Anrufsteuerung B
15) Ermittlung der für diesen Fall vorgesehenen Einstellungen, z.B. Rufumleitung, in der Profil-Datenbank Ca des Haupt-Teilnehmers B10 und Ableitung des weiteren Verhaltens durch das Rufsteuerungssystem B.
16) Initiieren einer Rufumleitung
17) direkter Rufaufbau durch die Netzvermittlung zum Umleitungsziel E

Eine für solche Rufumleitungen sonst übliche Verbindungsführung mit entsprechenden Leitungsbelegungen von der ursprünglichen Vermittlung A zur Aufenthaltsvermittlung D1, D2 des Teilnehmers und weiter zum finalen Umleitungsziel E wurde somit vermieden.

Nachfolgende **Tabelle 1** bietet ein Beispiel für die Ermittlung eines geeigneten Verhaltens der intelligenten Ruf-Steuerung Ba im Netzelement B (siehe Schritt 6 oben): Anhand des für die Endgeräte B10/B20/B30 ermittelten Status (hier: Tabelle 1, Zeile 3: Idle, Idle, NRc) (Schritte 4 bis 6) wird hierbei über den weiteren Ablauf der Verbindungssteuerung entschieden.

**Tabelle 1**

| Nb | B10 1) | B20 1) | B30 1) | Reaktion nach Ablauf der Statusabfrage | Anm. |
|---|---|---|---|---|---|
| 1 | Idle | Idle | Idle | Ruf B10/B20/B30 | 2) |
| 2 | Idle | Idle | Busy | Rufumleitung gemäß Teilnehmerprofil | |
| **3** | **Idle** | **Idle** | **NRc** | **Ruf B10/B20** | **2)** |
| 4 | Idle | Idle | NP | Ruf B10/B20/B30 | 2) |
| 5 | Idle | Busy | Idle | s. Zeile 2 | |
| 6 | Idle | Busy | Busy | s. 2 | |
| 7 | Idle | Busy | NRc | s. 2 | |
| 8 | Idle | Busy | NP | s. 2 | |
| 9 | Idle | NRc | Idle | Ruf B10/B30 | 2) |
| 10 | Idle | NRc | Busy | s.2 | |
| 11 | Idle | NRc | NRc | Ruf B10 | 2) |
| 12 | Idle | NRc | NP | Ruf B10/B30 | 2) |
| 13 | Idle | NP | Idle | Ruf B10/B20/B30 | 2) |
| 14 | Idle | NP | Busy | s.2 | |
| 15 | Idle | NP | NRc | Ruf B10/B20 | 2) |
| 16 | Idle | NP | NP | Ruf B10/B20/B30 | 2) |
| 17 | Busy | Idle | Idle | s.2 | |
| 18 | Busy | Idle | Busy | s. 2 | |
| 19 | Busy | Idle | NRc | s. 2 | |
| 20 | Busy | Idle | NP | s. 2 | |
| 21 | Busy | Busy | Idle | s. 2 | |
| 22 | Busy | Busy | Busy | s. 2 | |
| 23 | Busy | Busy | NRc | s. 2 | |
| 24 | Busy | Busy | NP | s. 2 | |
| 25 | Busy | NRc | Idle | s. 2 | |
| 26 | Busy | NRc | Busy | s. 2 | |
| 27 | Busy | NRc | NRc | s. 2 | |
| 28 | Busy | NRc | NP | s. 2 | |
| 29 | Busy | NP | Idle | s. 2 | |
| 30 | Busy | NP | Busy | s.2 | |
| 31 | Busy | NP | NRc | s. 2 | |
| 32 | Busy | NP | NP | s.2 | |
| 33 | NRc | Idle | Idle | Ruf B20/B30 | 2) |
| 34 | NRc | Idle | Busy | s. 2 | |
| 35 | NRc | Idle | NRc | Ruf B20 | 2) |
| 36 | NRc | Idle | NP | Ruf B20, B30 | 2) |
| 37 | NRc | Busy | Idle | s. 2 | |
| 38 | NRc | Busy | Busy | s. 2 | |
| 39 | NRc | Busy | NRc | s. 2 | |
| 40 | NRc | Busy | NP | s. 2 | |
| 41 | NRc | NRc | Idle | Ruf B30 | 2) |
| 42 | NRc | NRc | Busy | s. 2 | |
| 43 | NRc | NRc | NRc | s. 2 | |
| 44 | NRc | NRc | NP | Ruf B30 | 2) |
| 45 | NRc | NP | Idle | Ruf D20/B30 | 2) |
| 46 | NRc | NP | Busy | s. 2 | |
| 47 | NRc | NP | NRc | Ruf B20 | 2) |
| 48 | NRc | NP | NP | Ruf B20/B30 | 2) |
| 49 | NP | Idle | Idle | Ruf B10/B20/B30 | 2) |
| 50 | NP | Idle | Busy | s. 2 | |
| 51 | NP | Idle | NRc | Ruf B10/B20 | 2) |
| 52 | NP | Idle | NP | Ruf B10/B20/B30 | 2) |
| 53 | NP | Busy | Idle | s. 2 | |
| 54 | NP | Busy | Busy | s. 2 | |
| 55 | NP | Busy | NRc | s. 2 | |
| 56 | NP | Busy | NP | s.2 | |
| 57 | NP | NRc | Idle | Ruf B10/B30 | 2) |
| 58 | NP | NRc | Busy | s. 2 | |
| 59 | NP | NRc | NRc | Ruf B10 | 2) |
| 60 | NP | NRc | NP | Ruf B10/B30 | 2) |
| 61 | NP | NP | Idle | Ruf B10/B20/B30 | 2) |
| 62 | NP | NP | Busy | s.2 | |
| 63 | NP | NP | NRc | Ruf B10/B20 | 2) |
| 64 | NP | NP | NP | Ruf B10/B20/B30 | 2) |

Erläuterung zu den Anmerkungen in der Tabelle:
1) Teilnehmerstatus:
   - Busy:
      besetzt
   - NRc (not reachable)
      nicht erreichbar
   - Idle:
      frei
   - NP (not provided):
      kein Status verfügbar
2) Verbindungsaufbau zu den ermittelten Endgeräten wird initiiert

Eine weitere Verbesserung des Ablaufes ergibt sich, wenn die Rufsteuerung B nicht nur die Profildaten der Mobilitäts-/Profil-Datenbank Ca einer Masterchipkarte (ist die SIM-Karte des Haupt-Endgerätes) für die Steuerung nutzt, sondern diese Daten auch mit den Mobilitäts-/Profil-Datenbanken Cb, Cc der anderen SIM-Karten synchronisiert werden. Hierdurch ergibt sich für den Teilnehmer der Vorteil, das er mit einem beliebigen seiner Endgeräte B10, B20, B30 den Status der jeweils diesem zugeordneten Mobilitäts-/Profil-Datenbank Ca, Cb, Cc abfragen kann und immer die selbe Information über den Zustand seiner Leistungsmerkmale (z.B. Rufumleitung) erhält.

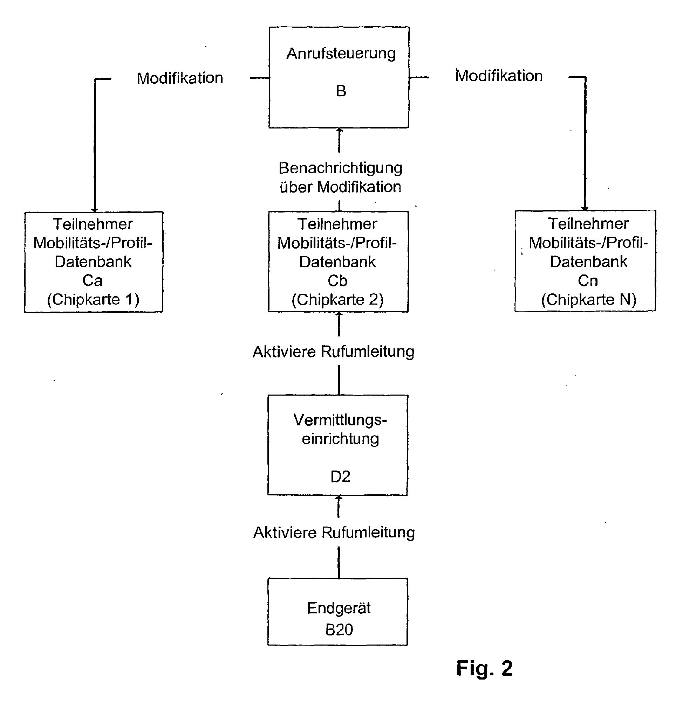

Figur 2 zeigt eine beispielhafte Realisierung dieser Synchronisation.
Der Teilnehmer aktiviert an einem seiner Endgeräte, z.B. Endgerät B20, eine Rufumleitung. Die vom Teilnehmer vorgenommene Einstellung wird vom Endgerät B20 bzw. der mit dem Gerät betriebenen SIM-Karte über die Vermittlungseinrichtung D2 an die zuständige Teilnehmer-Mobilitäts-/Profildatenbank Cb übermittelt und dort gespeichert. Die Teilnehmer-Mobilitäts-/Profildatenbank Cb benachrichtigt die intelligente Anrufsteuerung B über die vom Teilnehmer vorgenommene Einstellung (Modifikation) des Teilnehmerprofils. Die Anrufsteuerung B synchronisiert die vorgenommene Einstellung mit den Mobilitäts-/Profildatenbanken Ca, Cn, die den anderen SIM-Karten, respektive Endgeräten B20, B30, zugeordnet sind.

### Möglichkeiten bei Anwendung des erfindungsgemäßen Verfahrens sowie Hinweise zu seiner Durchführung

a) Der Teilnehmer eines öffentlichen Mobilfunknetzes kann mittels eines Endgerätes und geläufiger Funktionen die typischerweise einem Endgerät (bzw. dem daran angeschlossenen Identifikations-Chip (z.B. GSM-SIM, UMTS-USIM)) zugeordneten Leistungsmerkmale seines öffentlichen Netzes in einer Weise aktivieren, dass sich diese Änderung auch synchron auf die im Netz hinterlegten Leistungsmerkmale von anderen ihm zugeordneten Endgeräten (bzw. dem daran angeschlossenen Identifikations-Chip) auswirkt, indem das Profil des Endgerätes von einer intelligenten Rufsteuerung abgefragt wird und für z.B. die Steuerung der Leistungsmerkmale im Rahmen des Rufaufbaues zu einem oder mehreren der verknüpften Endgeräte angewendet wird.
b) Die benötigten Netzressourcen (Vermittlungen, Leitungen) zur Vermittlung eines oder mehrerer paralleler Anrufe auf ein oder mehrere Endgeräte eines Nutzers werden minimiert, indem vor der Rufzustellung, mit einer dazu benötigten Ressourcenbelegung, zunächst eine intelligente Anrufsteuerung die Systemzustände (z.B. besetzt, frei, nicht erreichbar) der zu rufenden Endgeräte, über entsprechende Datenbankabfragen der Mobilitäts-/Profildatenbanken der Endgeräte aber auch der Vermittlungen in denen sich die Endgeräte aufhalten, ermittelt und hieraus eine optimierte Anrufzustellung herleitet, bei der nur Erfolg versprechende Rufversuche einschließlich der zugehörigen Belegung von Netzressourcen initiiert werden.
c) Die benötigten Netzressourcen (Vermittlungen, Leitungen) zur Vermittlung einer Rufumleitung im öffentlichen Mobilfunknetz werden minimiert, indem zunächst vor der Rufzustellung eine intelligente Anrufsteuerung die Systemzustände (z.B. besetzt, frei, nicht erreichbar) des zu rufenden Endgerätes, über entsprechende Datenbankabfragen sowohl der Datenbank, die das zugeordnete Leistungsmerkmalprofil enthält, als auch der Vermittlung in deren zugeordnetem Funkbereich sich das Endgerät aufhält, ermittelt und ggf. unmittelbar eine Rufumleitung, gemäß dem ermittelten Systemzustand des Endgerätes (frei, besetzt, nicht erreichbar) und den Einstellungen des Endgerätes für eine Rufumleitung einleitet, d.h. ohne Aufbau einer Leitung zu dem gerufenen Endgerät. Soweit sich aus dem ermittelten Systemzustand ableiten lässt, dass ein Endgerät frei für den Empfang eines Anruf es ist, erfolgt zunächst eine Rufzustellung, jedoch in der Weise, dass für den Fall, dass es nicht zu einer Annahme der Verbindung kommt (z.B.: funktechnisch nicht erreichbar, Teilnehmer meldet sich nicht, Teilnehmer lehnt Anruf ab), die belegte Leitung wieder bis zum Ursprung der Verbindung freigegeben und ggf. gemäß dem sich aus dem erfolglosen Anrufversuch ermittelten Endgerätezustand sowie den zuvor ermittelten Einstellungen des Endgerätes für die Rufumleitungsfunktionalität eine direkte Verbindung zu einem gewünschten Rufumleitungsziel hergestellt wird.
d) Nutzung und Kombination obiger Verfahren zur Optimierung von Netzressourcen und kundenrelevantem Systemverhalten für die Durchführung von über einen Anruf initiierten parallelen Anrufversuche zu den einem Nutzer zugeordneten Endgeräten. Hierbei wird ggf. die Einleitung einer Rufumleitung in der Ursprungsvermittlung, basierend auf der Auswertung der Systemzustände aller parallel gerufenen Endgeräte, von einer zentralen Steuerung initiiert.

## Patentansprüche

1. Verfahren zur Optimierung des Einsatzes von Netzressourcen eines öffentlichen Telekommunikationsnetzes bei der Vermittlung eines oder mehrerer paralleler Rufe auf eines oder mehrere Endgeräte (B10, B20, B30) einer eine Mehrgerätekonfiguration bildenden Anzahl von Endgeräten, **dadurch gekennzeichnet, dass** vor der Zustellung eines Rufes, wobei aus der Art des Rufwunsches eine für die Vollendung des Rufes erforderliche Belegung von Ressourcen resultiert, mittels einer intelligenten Anrufsteuerung (B) des öffentlichen Telekommunikationsnetzes die Systemzustände der zu rufenden Endgeräte bzw. der an den Endgeräten angeschlossenen Identifikations-Chips und der involvierten Vermittlungseinrichtungen (D1, D2, D3) mittels Datenbankabfragen von den Endgeräten bzw. den am jeweiligen Endgerät angeschlossenen Identifikations-Chips und/oder den involvierten Vermittlungseinrichtungen (D1, D2, D3) zugeordneten Mobilitäts-/Profildatenbanken (Ca, Cb, Cc) ermittelt werden, wobei anhand der Daten über die Systemzustände der zu rufenden Endgeräte (B10, B20, B30) bzw. der an den Endgeräten angeschlossenen Identifikations-Chips eine optimierte Anrufzustellung erfolgt, indem nur Erfolg versprechende Rufversuche mit den zugehörigen Belegungen von entsprechenden Netzressourcen initiiert werden.

2. Verfahren gemäß Anspruch 1, **dadurch gekennzeichnet, dass** die Systemzustände der zu rufenden Endgeräte (B10, B20, B30) bzw. der an den Endgeräten angeschlossenen Identifikations-Chips vor der eigentlichen Rufzustellung ermittelt werden.

3. Verfahren gemäß einem der Ansprüche 1 oder 2, **dadurch gekennzeichnet, dass** für den Fall, dass aus den Daten über den Systemzustand ein Endgerät (B10, B20, B30) als frei für den Empfang eines Anruf es ableitbar ist, zunächst eine Rufzustellung erfolgt, und dass für den Fall, dass es zu keiner Annahmen der Verbindung kommt, (z.B. funktechnisch nicht erreichbar, Teilnehmer meldet sich nicht, Teilnehmer lehnt Anruf ab), die belegte Leitung wieder bis zum Ursprung der Verbindung freigegeben wird.

4. Verfahren gemäß Anspruch 3, **dadurch gekennzeichnet, dass** im Fall der nicht erfolgten Annahme des Rufes unter Verwendung der zuvor ermittelten Einstellungen des Endgerätes (B10, B20, B30) bzw. des am jeweiligen Endgerät angeschlossenen Identifikations-Chips eine direkte Verbindung zu einem gewünschten Rufumleitungsziel (E) hergestellt wird.

5. Verfahren nach einem der Ansprüche 1 bis 4, **dadurch gekennzeichnet, dass** die Einleitung einer Rufumleitung in der Ursprungsvermittlungseinrichtung (A) von einer zentralen Steuerung (B) erfolgt, basierend auf den Daten aus der Auswertung der Systemzustände aller gerufenen Endgeräte (B10, B20, B30) bzw. der an den jeweiligen Endgeräten angeschlossenen Identifikations-Chips.

6. Verfahren nach einem der vorangehenden Ansprüche 1 bis 5, **dadurch gekennzeichnet, dass** Daten über ein in der Mobilitäts-/Profildatenbank (Ca) vorhandenes Profil des an dem ersten Endgerät (B10) angeschlossenen Identifikations-Chips mit den Profilen der Mobilitäts-/Profildatenbanken (Cb, Cc) der an den anderen Endgeräten (B20, B30) angeschlossenen Identifikations-Chips synchronisiert werden.

7. Verfahren nach Anspruch 1, **dadurch gekennzeichnet, dass** bei einer Rufumleitung eines Rufes für eines der Endgeräte (B10, B20, B30)aus der Art des Rufwunsches eine für die Vollendung des Rufes erforderliche Belegung von Ressourcen resultiert, wobei vor der Zustellung des Rufes, mittels einer intelligenten Anrufsteuerung (B) der Systemzustand des mindestens einen zu rufenden Endgerätes (B10, B20, B30) bzw. des an dem mindestens einen Endgerät angeschlossenen Identifikations-Chips und/oder einer involvierten Vermittlungseinrichtung (D1, D2, D3) bzw. -einrichtungen ermittelt wird.

8. Verfahren gemäß Patentanspruch 7, **dadurch gekennzeichnet, dass** der Systemzustand des mindestens einen Endgerätes (B10, B20, B30) und/oder der mindestens einen Vermittlungseinrichtung (D1, D2, D3) mittels Datenbankabfragen von Mobilitäts-/Profildatenbanken (Ca, Cb, Cc) des mindestens einen Endgerätes bzw. des an dem mindestens einen Endgerät angeschlossenen Identifikations-Chips und/oder der mindestens einen involvierten Vermittlungseinrichtung ermittelt wird.

9. Verfahren gemäß einem der Patentansprüche 7 oder 8, **dadurch gekennzeichnet, dass** anhand der Daten über den Systemzustand des mindestens einen zu rufenden Endgerätes (B10, B20, B30) bzw. des an dem mindestens einen Endgerät angeschlossenen Identifikations-Chips eine optimierte Anrufzustellung erfolgt, indem nur Erfolg versprechende Rufversuche mit den zugehörigen Belegungen von entsprechenden Netzressourcen initiiert werden.

10. Verfahren gemäß einem der Ansprüche 7 bis 9, **dadurch gekennzeichnet, dass** vor der eigentlichen Rufzustellung anhand der zuvor ermittelten Informationen nicht zum Ziel führende Rufversuche vermieden werden.

11. Verfahren gemäß einem der Ansprüche 7 bis 10, **dadurch gekennzeichnet, dass** für den Fall, dass aus den Daten über den Systemzustand das mindestens eine Endgerät (B10, B20, B30) als frei für den Empfang eines Anrufes ableitbar ist, zunächst eine Rufzustellung erfolgt, und dass für den Fall, dass es zu keiner Annahme der Verbindung kommt (z.B. funktechnisch nicht erreichbar, Teilnehmer meldet sich nicht, Teilnehmer lehnt Anruf ab), die belegte Leitung wieder bis zum Ursprung der Verbindung freigegeben wird.

12. Verfahren gemäß Anspruch 11, **dadurch gekennzeichnet, dass** im Fall der nicht erfolgten Annahme des Rufes unter Verwendung der zuvor ermittelten Einstellungen des mindestens einen Endgerätes (B10, B20, B30) bzw. des an dem mindestens einen Endgerät angeschlossenen Identifikations-Chips eine direkte Verbindung zu einem gewünschten Rufumleitungsziel (E) hergestellt wird.

13. Verfahren nach einem der Ansprüche 7 bis 12, **dadurch gekennzeichnet, dass** die Einleitung einer Rufumleitung in der Ursprungsvermittlungseinrichtung (A) von mindestens einer zentralen Steuerung (B) erfolgt, basierend auf den Daten aus der Auswertung des Systemzustandes des mindestens einen gerufenen Endgerätes (B10, B20, B30) bzw. des an dem mindestens einen Endgerät angeschlossenen Identifikations-Chips.

14. Verfahren nach einem der vorangehende Ansprüche 7 bis 13, **dadurch gekennzeichnet, dass** Daten über ein in der Mobilitäts-/Profil-Datenbank (Ca, Cb, Cc) vorhandenes Profil des an dem mindestens einen Endgerät (B10) angeschlossenen Identifikations-Chips mit dem Profil der Mobilitäts-/Profil-Datenbank gegebenenfalls weiterer Identifikations-Chips von weiteren Endgeräten (B20, B30) des Teilnehmers synchronisiert werden.

15. System in einem öffentlichen Telekommunikationsnetz zur optimierten Steuerung einer Rufzustellung und/oder einer Rufumleitung in einer Mehrgerätekonfiguration bestehend aus mindestens zwei Endgeräten (B10, B20, B30) eines Telekommunikationssystems, **dadurch gekennzeichnet, dass** eine Speichereinheit (Ca, Cb, Cc) vorhanden ist, in der die Systemzustände von an der Mehrgerätekonfiguration beteiligten Endgeräten (B10, B20, B30) zumindest teilweise gespeichert sind, und dass eine intelligente Anlaufsteuerung (B) vorgesehen ist, die mit der genannten Speichereinheit (Ca, Cb, Cc) sowie mit zu steuernden Einheiten (A) des Telekommunikationsnetzes verbunden ist.

## Claims

1. Method for optimising the use of network resources of a public telecommunications network in the switching of one or more parallel calls to one or more terminals (B10, B20, B30) out of a number of terminals forming a multi-device configuration, **characterised in that**, before delivery of a call, the nature of the call request resulting in occupation of resources required for completion of the call, by means of an intelligent call control means (B) of the public telecommunications network the system status of the terminals to be called or of the identification chips connected to the terminals and of the switching devices involved (D1, D2, D3) are determined by means of database enquiries to mobility profile databases (Ca, Cb, Cc) assigned to the terminals or to the identification chips connected to the respective terminal and/or to the switching devices involved (D1, D2, D3), wherein with the aid of the data on the system status of the terminals to be called (B10, B20, B30) or of the identification chips connected to the terminals, optimised call delivery takes place by the fact that only promising call attempts with the associated occupation of corresponding network resources are initiated.

2. Method according to claim 1, **characterised in that** the system status of the terminals to be called (B10, B20, B30) or of the identification chips connected to the terminals is determined before actual call delivery.

3. Method according to one of claims 1 or 2, **characterised in that**, in the event that from the data on the system status a terminal (B10, B20, B30) can be deduced to be free for the reception of a call, to begin with call delivery takes place, and **in that**, in the event that the connection is not taken up (e.g. unavailable by telephone, subscriber does not answer, subscriber refuses call), the occupied line is cleared again to the source of the connection.

4. Method according to claim 3, **characterised in that**, in the event that the call is not taken up, using the previously determined settings of the terminal (B10, B20, B30) or of the identification chip connected to the respective terminal a direct connection is made to a desired call diversion destination (E).

5. Method according to one of claims 1 to 4, **characterised in that** the initiation of call diversion in the source switching device (A) is effected by a central control means (B), on the basis of the data from evaluation of the system status of all called terminals (B10, B20, B30) or of the identification chips connected to the respective terminals.

6. Method according to one of the preceding claims 1 to 5, **characterised in that** data on a profile existing in the mobility profile database (Ca), of the identification chip connected to the first terminal (B10), are synchronised with the profiles of the mobility profile databases (Cb, Cc) of the identification chips connected to the other terminals (B20, B30).

7. Method according to claim 1, **characterised in that**, in case of diversion of a call for one of the terminals (B10, B20, B30), the nature of the call request results in occupation of resources required for completion of the call, wherein, before delivery of the call, by means of an intelligent call control means (B) the system status of the at least one terminal to be called (B10, B20, B30) or of the identification chip connected to the at least one terminal and/or of a switching device or devices involved (D1, D2, D3) is determined.

8. Method according to claim 7, **characterised in that** the system status of the at least one terminal (B10, B20, B30) and/or of the at least one switching device (D1, D2, D3) is determined by means of database enquiries to mobility profile databases (Ca, Cb, Cc) of the at least one terminal or of the identification chip connected to the at least one terminal and/or of the at least one switching device involved.

9. Method according to one of claims 7 or 8, **characterised in that**, with the aid of the data on the system status of the at least one terminal to be called (B10, B20, B30) or of the identification chip connected to the at least one terminal, optimised call delivery takes place by the fact that only promising call attempts with the associated occupation of corresponding network resources are initiated.

10. Method according to one of claims 7 to 9, **characterised in that**, before actual call delivery, call attempts not leading to the destination with the aid of the previously determined information are avoided.

11. Method according to one of claims 7 to 10, **characterised in that**, in the event that from the data on the system status the at least one terminal (B10, B20, B30) can be deduced to be free for the reception of a call, to begin with call delivery takes place, and **in that**, in the event that the connection is not taken up (e.g. unavailable by telephone, subscriber does not answer, subscriber refuses call), the occupied line is cleared again to the source of the connection.

12. Method according to claim 11, **characterised in that**, in the event that the call is not taken up, using the previously determined settings of the at least one terminal (B10, B20, B30) or of the identification chip connected to the at least one terminal a direct connection is made to a desired call diversion destination (E).

13. Method according to one of claims 7 to 12, **characterised in that** the initiation of call diversion in the source switching device (A) is effected by at least one central control means (B), on the basis of the data from evaluation of the system status of the at least one called terminal (B10, B20, B30) or of the identification chip connected to the at least one terminal.

14. Method according to one of the preceding claims 7 to 13, **characterised in that** data on a profile existing in the mobility profile database (Ca, Cb, Cc), of the identification chip connected to the at least one terminal (B10), are synchronised with the profile of the mobility profile database of if necessary further identification chips of further terminals (B20, B30) of the subscriber.

15. System in a public telecommunications network for optimised control of call delivery and/or call diversion in a multi-device configuration consisting of two or more terminals (B10, B20, B30) of a telecommunications system, **characterised in that** there is a memory unit (Ca, Cb, Cc) in which the system status of terminals (B10, B20, B30) involved in the multi-device configuration is at least partially stored, and **in that** there is provided an intelligent sequence control means (B) which is connected to the aforementioned memory unit (Ca, Cb, Cc) as well as to units (A) of the telecommunications network to be controlled.

## Revendications

1. Procédé pour optimiser l'utilisation de ressources d'un réseau de télécommunication publique lors de la commutation d'un ou plusieurs appels parallèles vers un ou plusieurs terminaux (B10, B20, B30) parmi un nombre de terminaux qui forme une configuration à plusieurs appareils, **caractérisé en ce qu'**avant l'établissement d'une communication, étant précisé qu'une occupation de ressources nécessaire à l'établissement complet de la communication résulte du type de souhait d'appel, à l'aide d'une commande d'appel intelligente (B) du réseau de télécommunication publique les états de système des terminaux à appeler ou des puces d'identification raccordées aux terminaux et des dispositifs de commutation impliqués (D1, D2, D3) sont déterminés à l'aide d'interrogations de banques de données de mobilité/profil (Ca, Cb, Cc) affectées aux terminaux ou aux puces d'identification raccordées au terminal respectif et/ou aux dispositifs de commutation impliqués (D1, D2, D3), étant précisé qu'à l'aide des données sur les états de système des terminaux à appeler (B10, B20, B30) ou des puces d'identification raccordées aux terminaux un établissement optimisé a lieu grâce au fait que seuls les tentatives d'appel prometteuses sont déclenchées avec les occupations correspondantes de ressources de réseau correspondantes.

2. Procédé selon la revendication 1, **caractérisé en ce que** les états de système des terminaux à appeler (B10, B20, B30) ou des puces d'identification raccordées aux terminaux sont déterminés avant l'établissement de communication proprement dit.

3. Procédé selon l'une des revendications 1 ou 2, **caractérisé en ce que** pour le cas où à partir des données sur l'état de système il peut être déduit qu'un terminal (B10, B20, B30) est libre pour recevoir un appel, un établissement d'appel a lieu tout d'abord, et **en ce que** pour le cas où il n'y a pas d'acceptation de la liaison (par exemple non accessible pour des raisons techniques, l'abonné ne répond pas, l'abonné refuse l'appel), la ligne occupée est à nouveau libérée jusqu'à l'origine de la liaison.

4. Procédé selon la revendication 3, **caractérisé en ce que** dans le cas de la non acceptation de l'appel une liaison directe avec une destination de renvoi d'appel souhaitée (E) est établie à l'aide des réglages déterminés préalablement du terminal (B10, B20, B30) ou de la puce d'identification raccordée au terminal respectif.

5. Procédé selon l'une des revendications 1 à 4, **caractérisé en ce que** le déclenchement d'un renvoi d'appel dans le dispositif de commutation d'origine (A) se fait à partir d'une commande centrale (B), sur la base des données provenant de l'analyse des états de système de tous les terminaux (B10, B20, B30) appelés ou des puces d'identification raccordées aux terminaux respectifs.

6. Procédé selon l'une des revendications 1 à 5, **caractérisé en ce que** des données sur un profil existant dans la banque de données de mobilité/profil (Ca) de la puce d'identification raccordée au premier terminal (B10) sont synchronisées avec les profils des banques de données de mobililité/profil (Cb, Cc) des puces d'identification raccordées aux autres terminaux (B20, B30).

7. Procédé selon la revendication 1, **caractérisé en ce que** lors d'un renvoi d'appel pour l'un des terminaux (B10, B20, B30) une occupation de ressources nécessaire à l'établissement complet de la communication résulte du type de souhait d'appel, étant précisé qu'avant l'établissement de la communication, l'état de système du ou des terminaux à appeler (B10, B20, B30) ou de la puce d'identification raccordée à celui-ci/ceux-ci et/ou d'un ou plusieurs dispositifs de commutation impliqués (D1, D2, D3) est déterminé à l'aide d'une commande d'appel intelligente (B).

8. Procédé selon la revendication 7, **caractérisé en ce que** l'état de système du terminal ou des terminaux (B10, B20, B30) et/ou du ou des dispositifs de commutation (D1, D2, D3) est déterminé à l'aide d'interrogations de banques de données de mobilité/profil (Ca, Cb, Cc) du terminal ou des terminaux ou de la puce d'identification raccordée à celui-ci/ ceux-ci et/ou du ou des dispositifs de commutation impliqués.

9. Procédé selon l'une des revendications 7 ou 8, **caractérisé en ce qu'**à l'aide des données sur l'état de système du terminal ou des terminaux à appeler (B10, B20, B30) ou de la puce d'identification raccordée à celui-ci/ceux-ci un établissement de communication optimisé a lieu grâce au fait que seules les tentatives d'appel prometteuses sont déclenchées avec les occupations correspondantes de ressources de réseau correspondantes.

10. Procédé selon l'une des revendications 7 à 9, **caractérisé en ce qu'**avant l'établissement de communication proprement dit, à l'aide des informations déterminées au préalable les tentatives d'appel n'aboutissant pas sont évitées.

11. Procédé selon l'une des revendications 7 à 10, **caractérisé en ce que** pour le cas où à partir des données sur l'état de système il peut être déduit que le terminal ou les terminaux (B10, B20, B30) sont libres pour recevoir un appel, un établissement de communication a lieu tout d'abord, et **en ce que** pour le cas où il n'y a pas d'acceptation de la liaison (par exemple non accessible pour des raisons techniques, l'abonné ne répond pas, l'abonné refuse l'appel), la ligne occupée est à nouveau libérée jusqu'à l'origine de la liaison.

12. Procédé selon la revendication 11, **caractérisé en ce que** dans le cas de la non acceptation de l'appel une liaison directe avec une destination de renvoi d'appel souhaitée (E) est établie à l'aide des réglages déterminés préalablement du terminal ou des terminaux (B10, B20, B30) ou de la puce d'identification raccordée à celui-ci/ceux-ci.

13. Procédé selon l'une des revendications 7 à 12, **caractérisé en ce que** le déclenchement d'un renvoi d'appel dans le dispositif de commutation d'origine (A) se fait à partir d'une commande centrale (B), sur la base des données provenant de l'analyse de l'état de système du terminal ou des terminaux (B10, B20, B30) appelés ou de la puce d'identification raccordée à celui-ci/ceux-ci.

14. Procédé selon l'une des revendications 7 à 13 précédentes, **caractérisé en ce que** des données sur un profil existant dans la banque de données de mobilité/profil (Ca, Cb, Cc) de la puce d'identification raccordée au terminal ou aux terminaux (B10) sont synchronisées avec le profil de la banque de données de mobililité/profil éventuellement d'autres puces d'identification d'autres terminaux (B20, B30) de l'abonné.

15. Système dans un réseau de télécommunication publique pour une commande optimisée d'un établissement de communication et/ou d'un renvoi d'appel dans une configuration à plusieurs appareils composée d'au moins deux terminaux (B10, B20, B30) d'un système de télécommunication, **caractérisé en ce qu'**il est prévu une unité de mémoire (Ca, Cb, Cc) dans laquelle sont stockés au moins en partie les états de système de terminaux (B10, B20, B30) participant à la configuration à plusieurs appareils, et **en ce qu'**il est prévu une commande de déroulement intelligente (B) qui est reliée à ladite unité de mémoire (Ca, Cb, Cc) et à des unités à commander (A) du réseau de télécommunication.
